# EUROPÄISCHE PATENTSCHRIFT

(11) **EP 1 812 145 B1**
(45) Veröffentlichungstag und Bekanntmachung des Hinweises auf die Patenterteilung: **28.03.2012**
(21) Anmeldenummer: 05806748.9
(22) Anmeldetag: 11.11.2005
(51) Int. Cl.: F01N 3/022, F01N 3/023, F01N 3/035, B01D 53/94, B01D 46/24

(54) **BESCHICHTETE PARTIKELFALLE MIT STICKSTOFFDIOXID - NEUBILDUNG**
COATED PARTICLE TRAP WITH NITROGEN DIOXIDE REGENERATION
PIEGE A PARTICULES POURVU D'UN REVETEMENT PERMETTANT UNE NOUVELLE FORMATION DE DIOXYDE D'AZOTE

(30) Priorität: 12.11.2004 DE 102004054845
(43) Veröffentlichungstag der Anmeldung: 01.08.2007
(73) Patentinhaber: Emitec Gesellschaft für Emissionstechnologie mbH, 53797 Lohmar (DE)
(72) Erfinder: MAUS, Wolfgang, 51429 Bergisch Gladbach (DE); BRÜCK, Rolf, 51429 Bergisch Gladbach (DE)
(74) Vertreter: Rössler, Matthias
(86) Internationale Anmeldenummer: PCT/EP2005/012111
(87) Internationale Veröffentlichungsnummer: WO 2006/050971

(56) Entgegenhaltungen:
- WO-A-2005/018790
- WO-A-2005/091821
- WO-A-2005/099867
- DE-A1- 10 235 766
- DE-A1- 10 257 113
- DE-A1- 19 519 137
- US-A1- 2001 006 934
- US-A1- 2004 116 285

## Beschreibung

Die vorliegende Erfindung betrifft eine Vorrichtung zur Reduzierung von Partikeln eines Abgases mit mindestens einer Trägerstruktur eines vorgebbaren Volumens. Die Trägerstruktur bildet eine Vielzahl von durchströmbaren Kanälen, wobei die Kanäle zumindest teilweise Mittel zur Umlenkung des Abgases innerhalb des Kanals aufweisen. Weiterhin ist die mindestens eine Trägerstruktur wenigstens teilweise mit einer ersten Beschichtung umfassend Washcoat vorgesehen. Derartige Vorrichtungen werden insbesondere zur Reinigung von Abgasen mobiler Verbrennungskraftmaschinen eingesetzt. Deshalb betrifft die vorliegende Erfindung auch ein Abgasreinigungssystem für eine mobile Verbrennungskraftmaschine sowie ein Fahrzeug.

Bei bekannten Filtersystemen wird zwischen so genannten "offenen" und "geschlossenen" Systemen unterschieden. Geschlossenen Systeme weisen regelmäßig wechselweise verschlossene Kanäle auf, um auf diese Weise das zu reinigende Abgas durch eine porös ausgestalteten Kanalwände hindurch zu zwingen. Bei diesen geschlossenen Systemen besteht jedoch die Gefahr, dass sich Bereiche mit großen Ansammlungen von Rußpartikeln bilden, die letztendlich zum Verstopfen des Filters führen. Eine Reaktivierung eines solchen Filters kann durch Abbrennen der Rußpartikel erfolgen, wobei besondere Maßnahmen zur Erhöhung der Temperatur im Filter getroffen werden müssen (kurzzeitiges elektrisches Aufheizen, Kraftstoffdirekteinspritzung, Additivzugabe, etc.). Aus diesem Grund werden nun vielfach offene Systeme eingesetzt, da diese nicht verstopfen können und demnach keine hohen apparativen Aufwendungen zur Folge haben.

Bei offenen Systemen existieren keine vollständig verschlossenen Kanäle. Zumindest ein Teil der Kanäle ist jedoch mit Mitteln ausgestattet, die eine Strömungsbeeinflussung in der Art bewirken, dass das Abgas bzw. die darin enthaltenen Partikel nicht gerade hindurchströmen sondern gegen eine Kanalwand abgelenkt werden. Hierzu werden beispielsweise Vorsprünge, Noppen, Leitschaufeln, Kanalverengungen oder ähnliches eingesetzt. Diese Änderung der sonst geradlinigen verlaufenden Kanalströmung bewirkt, dass insbesondere die Rußpartikel mit den Kanalwänden in Kontakt kommen. Die Rußpartikel lagern sich dann auf einer Oberfläche der Kanalwand ab, und können nun, bevorzugt mit im Abgas enthaltenen Stickstoffdioxid, umgesetzt werden.

Demnach ist es bei offenen Systemen von besonderer Bedeutung, eine ausreichende Menge Stickstoffdioxid (NO₂) bereitzustellen, um besonders hohe Umsatzraten des anfallenden Rußes bzw. der anfallenden Partikel zu gewährleisten. Als eine Möglichkeit ist dabei bekannt, einer solchen Partikelfalle einen so genannten Oxidationskatalysator vorzuschalten, der in einer ersten Stufe das im Abgas enthaltene Stickstoffmonoxid (NO) aufoxidiert und somit den Stickstoffdioxid-Anteil im Abgas erhöht. Der mit Stickstoffdioxid angereicherte Abgasstrom trifft nun auf den Filter. Diese Kombination aus einem vorgelagerten Oxidationskatalysator und einem Partikelabscheider wird vielfach mit CRT ("continuous regeneration trap") bezeichnet, wie es beispielsweise aus der EP 0341832 hervorgeht.

Ausgehend von der EP 0341832 wurden viele Anstrengungen unternommen, die Komponenten dahingehend weiter zu entwickeln, dass die offenen Systeme, bei denen es grundsätzlich theoretisch möglich ist, dass ein Teil des Abgases wieder austritt, ohne durch eine Filterwand getreten zu sein, effizienter werden. Insbesondere standen dabei die Mittel zur Umlenkung des Abgasstromes innerhalb der Kanäle im Zentrum des Interesses. Außerdem wurde dazu übergegangen, nicht nur glatte Wände zur Bildung der Kanäle einzusetzen, sondern die Kanäle mit Fasermaterial und/oder gasundurchlässigen Material aufzubauen. Als Beispiel für einen bereits sehr effizienten Partikelfilter der "offenen" Bauart ist auf das deutsche Gebrauchsmuster DE 207 17 873 U1 zu verweisen.

Aus der US 2004/116285 A1 geht ein Dieselpartikelfilter hervor, der eine verbesserte thermische Stabilität und ein verbessertes Partikelumsetzungsverhalten aufweisen soll. Dieser Dieselpartikelfilter weist ein poröses Substrat auf, welches katalytisch beschichtet ist, wobei eine Menge an Washcoat zwischen 3,57 und 178 Gramm pro Liter Substratvolumen eingesetzt wird.

Die DE 195 19 137 A1 betrifft eine Katalysatorzusammensetzung. Dort wird vorgeschlagen, Katalysatoren, die zur Entschwefelung von Rohöl in Ölraffinerien verwendet worden sind, als Grundstoff für einen Katalysator zur Reinigung von Diesel-Abgas zu verwenden. Dabei wird eine Katalysatorzusammensetzung beschrieben, die Vanadium, Molybdän, Nickel, Kobalt und Aluminiumoxid enthält.

Die DE 102 57 113 A1 betrifft eine hochtemperaturfeste Faserlage aus Metallfasern für eine offene Partikelfalle, die zumindest abschnittweise eine katalytisch aktive Beschichtung aufweist. Diese hochtemperaturfeste Faserlage ist für den Einsatz in offenen Partikelfallen gedacht, welche bevorzugt mehrere verschiedene katalytische Funktionen gleichzeitig oder auch räumlich getrennt bewirken kann.

Die nachveröffentlichte WO 2005/099867 A1 offenbart eine Partikelfalle, welche mit Faserlagen und gewellten Metallfolien aufgebaut ist. Dabei bilden die gewellten Metallfolien Strömungsumlenkungen, so dass das Abgas in den Kanälen gezielt aufgeteilt wird und ein Teil zu den Faserlagen hin umgelenkt wird und ein anderer Teil weiter den Kanal entlang strömt.

Aufgabe der vorliegenden Erfindung ist es, eine Vorrichtung, zur Reduzierung von Partikeln eines Abgases anzugeben, die noch effizienter im Hinblick auf die Umsetzung von Partikeln ist Sie soll zudem einfach Aufgebaut sein und leicht im Rahmen einer Serienfertigung herstellbar sein. Zudem sollen effiziente Abgasreinigungssysteme und umweltfreundliche Fahrzeuge angegeben werden.

Diese Aufgaben werden gelöst mit einer Vorrichtung zur Reduzierung von Partikeln eines Abgases mit den Merkmalen des Patentanspruchs 1. Weitere vorteilhafte Ausgestaltungen der Vorrichtung sowie besonders bevorzugte Einsatzgebiete der Vorrichtung sind in den abhängig formulierten Patentansprüchen aufgeführt. Es ist darauf hinzuweisen, dass die in den Patentansprüchen einzeln aufgeführten Merkmale, in beliebiger, technologisch sinnvoller Weise miteinander kombiniert werden können, und weitere vorteilhafte Ausgestaltungen der Erfindung aufzeigen. Weitere Ausführungsformen können sich aus einer Charakterisierung mit den -Merkmalen der Beschreibung ergeben.

Die Vorrichtung zur Reduzierung von Partikeln eines Abgases mit mindestens einer Trägerstruktur eines vorgebbaren Volumens hat eine Vielzahl von durchströmbaren Kanälen. Die Kanäle weisen zumindest teilweise Mittel zur Umlenkung des Abgases innerhalb des Kanals auf. Die mindestens eine Trägerstruktur weist zudem wenigstens teilweise eine erste Beschichtung auf, welche Washcoat umfasst Die Vorrichtung ist dadurch gekennzeichnet, dass pro Liter des mit der ersten Beschichtung versehenen Volumens der Trägerstruktur eine Menge Washcoat im Bereich von 10 bis 60 Gramm vorgesehen ist.

Die mindestens eine Trägerstruktur hat eine Länge in einer Strömungsrichtung, die mindestens 120 Millimeter beträgt. Weiter weisen die Kanäle entlang der Länge in einem vorgegebenen Abstand immer wieder Mittel zur Umlenkung des Abgases auf.

Zudem weist die Trägerstruktur mindestens eine Filterlage auf, die ein Verbund aus Filtermaterial und Metallstreifen ist, wobei das Filtermaterial in Strömungsrichtung von jeweils einem Metallstreifen begrenzt ist, wobei ein Metallstreifen:
- breiter als der andere Metallstreifen ist,
- mehrere Perforationen aufweist, sowie
- als Katalysator-Trägerfläche und/oder als Mischer für das einströmende Abgas ausgeführt ist.

Mit "Trägerstruktur" ist insbesondere eine Art Wabenstruktur mit einer Vielzahl von Kanälen gemeint. Eine solche Trägerstruktur ist beispielsweise in einem Gehäuse bzw. einem Mantelrohr angeordnet, es ist jedoch auch möglich, mehrere solche Trägerstrukturen in einem Gehäuse vorzusehen. Die Trägerstruktur weist ein vorgebbares Volumen auf. Dabei ist das Volumen der Trägerstruktur gemeint, welches die Kanäle bildet, wobei die Kanalwände und die Kanäle selbst dem Volumen zuzurechnen sind. Die Kanäle verlaufen bevorzugt im wesentlichen parallel zueinander und in Strömungsrichtung. Die Kanaldichte beträgt beispielsweise 100 bis 600 cpsi ("cells per square inch", entspricht in etwa 15,5 bis 93 Kanälen pro Quadratzentimeter), bevorzugt auch 200 bis 400 cpsi (entspricht in etwa 31 bis 52 Kanälen pro Quadratzentimeter).

Weiter sind Mittel zur Umlenkung des Abgases innerhalb eines Kanals vorgesehen. Diese Mittel können beispielsweise in den Kanal hineinragende Vorsprünge, Noppen, etc., Leitschaufeln, Öffnungen, Eindellungen oder Ähnliches umfassen. Mit den Mitteln wird eine lokale Umlenkung zumindest eines Teils des Abgases bewirkt, welches durch den Kanal strömt. Bevorzugt wird mit den Mitteln erreicht, dass zumindest ein Teil des Abgasstromes in benachbarte Kanäle strömen kann. Hierfür können separate Strömungswege von einem Kanal hin zu einem benachbarten gebildet sein, es ist aber beispielsweise auch möglich, dass dieser Teil des Abgases durch eine gasdurchlässige Kanalwand hindurch tritt. Ganz besonders bevorzugt handelt es sich bei dieser Ausgestaltung der Kanäle der Trägerstruktur um ein so genanntes offenes System, wie es eingangs bereits beschrieben wurde.

Bei der hier beschriebenen Vorrichtung handelt es sich um eine beschichtete Vorrichtung zur Reduzierung von Partikeln. Diese erste Beschichtung umfasst Washcoat, ein poröses Aluminiumoxid, welches eine besonders zerklüftete Oberfläche aufweist. Diese Washcoat-Schicht dient beispielsweise zur Aufnahme von katalytisch wirkenden Materialien und zeichnet sich gleichfalls durch eine hohe Adsorptionsfähigkeit von (Ruß-)Partikeln aus.

Ziel der Erfindung ist es, die erste Beschichtung so zu gestalten, dass eine Neubildung von Stickstoffdioxid innerhalb der Vorrichtung stattfinden kann. Der ankommende NO₂-angereichterte Abgasstrom kommt üblicherweise mit den angelagerten Partikeln in Kontakt und setzt diese (beispielsweise in Kohlendioxid) um. Die damit bewirkte Oxidation des Rußes bzw. der Partikel führt allerdings gleichzeitig zur Reduktion des Stickstoffdioxids und einer Vermehrung von Stickstoffmonoxid. Damit wäre jedoch der vorhandene Stickstoffdioxid schnell verbraucht und stünde nicht mehr zur weiteren Umsetzung zur Verfügung. Deshalb wird hier nun eine Vorrichtung angegeben, bei der das bereits zum Einsatz gelangte Stickstoffmonoxid nun wieder zu Stickstoffdioxid aufoxidiert wird, um in stromabwärts gelegene Teilbereichen der Kanäle erneut zur Umsetzung von Partikeln zur Verfügung zu stehen.

Dieses wird dadurch erreicht, dass pro Liter [1] des mit der ersten Beschichtung versehenen Volumens der Trägerstruktur eine Menge Washcoat im Bereich von 10 bis 60 Gramm [g] vorgesehen ist. Vorzugsweise liegt die Mange Washcoat im Bereich von 20 bis 40 g/l, und insbesondere von 25 bis 35 g/l. Damit ist eine Washcoat-Menge angegeben, die deutlich unterhalb der sonst üblichen Menge liegt (z. B. ca. 200 g/l). Die reduzierte Washcoat-Menge führt nun dazu, dass die Kanäle einen etwas größeren, frei durchströmbaren Kanalquerschnitt aufweisen und zudem eine etwas weniger zerklüftete Kanaloberfläche vorliegt. Das hat beispielsweise zur Folge, dass sich der Ruß bzw. die Partikel nicht im Eingangsbereich der Vorrichtung verstärkt anlagern, sondern dass sich eine geringere, dafür aber über die Länge der Vorrichtung bzw. der Kanäle gleichmäßiger verteilte, Anlagerung der Partikel einstellt. Dies wiederum hat den Effekt, dass damit auch noch ausreichend freie Oberfläche der Kanäle vorliegt, die beispielsweise mit den katalytisch aktiven Substanzen dotiert ist. Nun wird die Möglichkeit eröffnet, dass das Abgas einerseits mit der katalytisch aktiven Beschichtung reagiert und eine Oxidation von Stickstoffmonoxid stattfindet, und an einer anderen Stelle wiederum die Oxidation des Rußes bzw. der Partikel stattfinden kann. Tests haben gezeigt, dass sich hierbei eine Reduktion der Partikelemission von mehr als 20 % gegenüber herkömmlichen Partikelfiltern realisieren lässt.

Gemäß einer weiteren Ausgestaltung der Vorrichtung ist die erste Beschichtung mit mindestens einem Edelmetall versehen, wobei pro Liter [1] des mit der ersten Beschichtung versehenen Volumens der Trägerstruktur eine Menge des mindestens einem Edelmetalls im Bereich von 0,35 bis 3,53 Gramm [g] vorgesehen ist. Das entspricht in etwa einer Beladung von 10 bis 60 Gramm pro Kubikfuß [g/ft³]. Als Edelmetall wird bevorzugt Platin eingesetzt. Ganz besonders bevorzugt ist eine Edelmetall-Menge im Bereich von 1,3 g/l (bzw. 36,8 g/ft³) bis 1,5 g/l (bzw. 42,5 g/ft³). Diese Menge an Edelmetall hat sich ebenfalls für den Einsatz der Neubildung von Stickstoffdioxid als besonders effektiv erwiesen.

Weiter hat die mindestens eine Trägerstruktur eine Länge in einer Strömungsrichtung, die mindestens 120 Millimeter [mm] beträgt. Besonders bevorzugt sind dabei Trägerstrukturen die eine Länge von mindestens 150 mm aufweisen.

Damit wird gewährleistet, dass, trotz der reduzierten Adsorptionseignung der Washcoat-Beschichtung für Ruß, eine ausreichend große Länge zur Verfugung steht, so dass schließlich dennoch nahezu alle Rußpartikel zur Anlage an einer Kanalwand gebracht werden können. Hierzu weisen die Kanäle in vorgebbaren Abstand bevorzugt immer wieder mittels Umlenkung (Mittel zur Umlenkung) des Abgases auf, so dass die Wahrscheinlichkeit des Kontaktes der Rußpartikel mit der ersten Beschichtung bzw. der Kanalwand vergrößert wird.

Gemäß einer weiteren Ausgestaltung der Vorrichtung, umfasst die mindestens eine Trägerstruktur zumindest teilweise strukturierte Metallfolien. Vorteilhafterweise ist die Trägerstruktur mit einer Mehrzahl von abwechselnd angeordneten glatten und gewellten Metallfolien gebildet. Diese sind zu einem Wabenkörper miteinander verwunden bzw. verschlungen. Ein solcher Wabenkörper wird in ein Gehäuse eingeführt und zumindest teilweise verlötet. Zur Ausgestaltung der gewellten Metallfolie ist insbesondere auf die eingangs genannte DE 2017 873 zu verweisen, deren Inhalt hiermit vollständig zum Gegenstand der Beschreibung gemacht wird.

Ganz besonders bevorzugt ist eine Ausgestaltung der Vorrichtung, bei der die mindestens eine Trägerstruktur zumindest teilweise Metallfolien mit Perforationen umfasst. Solche Perforationen können in einem Abschnitt einer gewellten Metallfolie und/oder einer glatten Metallfolie vorgesehen sein. Die Perforationen sind dabei bevorzugt mit einem Durchmesser im Bereich von 3 mm bis 10 mm, bevorzugt 3 mm bis 8 mm, ausgeführt. Die Perforationen sind mit Rücksicht auf die Fertigung in Zeilen, Reihen oder einem ähnlichen Muster angeordnet. Außerdem ist auch möglich, dass zwischen den Perforationen zumindest teilweise Mikrostrukturen vorgesehen sind, liegt in Abhängigkeit von der Zelldichte im Bereich von 0,5 mm bis 2 mm deren Höhe im Bereich bis 1 mm liegt.

Außerdem umfasst die mindestens eine Trägerstruktur mindestens eine Filterlage. Bevorzugt kommen metallische Fasern für eine Filterlage in Betracht. Solche (zumindest teilweise metallischen) Faser-Vliese können auch im Verbund mit Metallfolien zum Einsatz gelangen. Bevorzugt ist dieser Verbund durch Verschweißen der Faserlage mit mindestens einen Abschnitt einer Metallfolie realisiert. Dabei kann die erste Beschichtung sowohl auf bzw. in der Filterlage als auch (oder gegebenenfalls nur) auf der Metallfolie vorgesehen sein.

Gemäß einer Weiterbildung der Vorrichtung weist die mindestens eine Trägerstruktur wenigstens einen ersten Teilbereich mit einer ersten Beschichtung und wenigstens einen zweiten Teilbereich mit einer zweiten Beschichtung auf. Bevorzugt sind dabei die beiden Teilbereiche der Trägerstruktur unterschiedlich ausgebildet. So wird insbesondere vorgeschlagen, dass in nur einem der beiden Teilbereiche, bevorzugt in dem stromabwärts gelegenen, die erfindungsgemäß angegebene Washcoat-Menge vorliegt. Unter Umständen ist es jedoch auch möglich, dass sowohl die erste Beschichtung als auch die zweite Beschichtung die gleiche Washcoat-Menge aufweist, sich die Beschichtungen jedoch in der Konzentration bzw. der Art der katalytisch aktiven Substanzen unterscheiden.

Gemäß einer weiteren vorteilhaften Ausführung der erfindungsgemäßen Vorrichtung weist die mindestens eine Trägerstruktur wenigstens einen ersten Teilbereich und wenigstens einen zweiten Teilbereich auf, von denen mindestens einer eine Beschichtung aufweist. So kann in vorteilhafter Weise erfindungsgemäß eine Trägerstruktur ausgebildet sein, bei der der erste Teilbereich eine Beschichtung aufweist, während der zweite Teilbereich unbeschichtet ist oder umgekehrt.

Besonders bevorzugt ist eine Vorrichtung, bei der die mindestens eine Trägerstruktur wenigstens einen ersten Teilbereich mit mindestens einer Filterlage und wenigstens einen filterlosen zweiten Teilbereich aufweist, wobei der mindestens eine erste Teilbereich den mindestens einen zweiten Teilbereich in Strömungsrichtung nachgeordnet ist. Ganz besonders bevorzugt ist dabei eine Ausgestaltung, bei der in dem wenigstens einen filterlosen zweiten Teilbereich nur unterschiedlich ausgestaltete Metallfolien vorgesehen sind, beispielsweise eine gewellte Metallfolie mit Mitteln zur Umlenkung des Abgasstromes und eine glatte Metallfolie mit Perforationen. Weiterhin ist in diesem Zusammenhang bevorzugt, dass der filterlose zweite Teilbereich keine Mittel zur Umlenkung des Abgases aufweist.

Als besonders bevorzugtes Einsatzgebiet wird ein Abgasreinigungssystem für eine mobile Verbrennungskraftmaschine vorgeschlagen, welches mindestens einen Konverter wenigstens zur Oxidation von im Abgas enthaltenen Stickstoffmonoxid zu Stickstoffdioxid umfasst und mindestens eine in Strömungsrichtung des Abgases nachgeordnete Vorrichtung der vorstehend beschrieben Art. Damit ist nun das so genannte "CRT"-System beschrieben, wobei die hier erfindungsgemäße Ausgestaltung der Vorrichtung zur Reduzierung der Partikel integriert wurde. Der Konverter kann unmittelbar stromaufwärts (und gegebenenfalls auch mit Kontakt zu) der Vorrichtung positioniert sein. Es ist jedoch auch möglich, dass zwischen beiden Komponenten ein Spalt oder eine größere Passage der Abgasleitung vorgesehen ist.

Gemäß einer Weiterbildung des Abgasreinigungssystems, welches nun mit einem Turbolader ausgeführt ist, ist ein Konverter zwischen der Verbrennungskraftmaschine und dem Turbolader angeordnet. Dieser erste Konverter ist damit in unmittelbarer Nähe der Verbrennungskraftmaschine positioniert und erreicht schon unmittelbar nach dem Start der Verbrennungskraftmaschine seine Anspringtemperatur (ca. 200°C). Auf diese Weise gewährleistet der Konverter bereits frühzeitig das Vorhandensein von ausreichend Stickstoffdioxid zur Umsetzung der stromabwärts aufgefangenen Rußpartikel. Der Turbolader dient dabei als eine Art Strömungsmischer, so dass eine gleichmäßige Verteilung von Stickstoffdioxid im Abgasstrom ermöglicht wird.

Schließlich wird noch ein Fahrzeug vorgeschlagen, das mindestens eine Vorrichtung der oben beschriebenen Art oder mindestens ein Abgasreinigungssystem, wie zuvor beschrieben, umfasst.

Die Erfindung sowie das technische Umfeld werden nun anhand der Figuren näher erläutert. Es ist darauf hinzuweisen, dass die Figuren besonders bevorzugte Ausfübrungsbeispiele der Erfindung zeigen, die Erfindung jedoch nicht darauf begrenzt ist. Außerdem umfassen die Figuren eine schematische Darstellung, die regelmäßig nicht zur Veranschaulichung von Größenverhältnissen geeignet ist.

Es zeigen:
- Fig. 1: Eine Ausführungsvariante eines Abgasreinigungssystems eines Fahrzeugs,
- Fig. 2: eine Detailansicht der Trägerstruktur mit Kanälen,
- Fig. 3: schematisch den Aufbau einer weiteren Ausführungsvariante der Vorrichtung,
- Fig. 4: eine perspektivische Darstellung einer weiteren Ausführungsvariante der Vorrichtung zur Partikelabscheidung,
- Fig. 5: eine schematische Darstellung der Reaktionsvorgänge in einem weiteren Ausführungsbeispiel der erfindungsgemäßen Vorrichtung, und
- Fig. 6: ein Detail aus Figur 4.

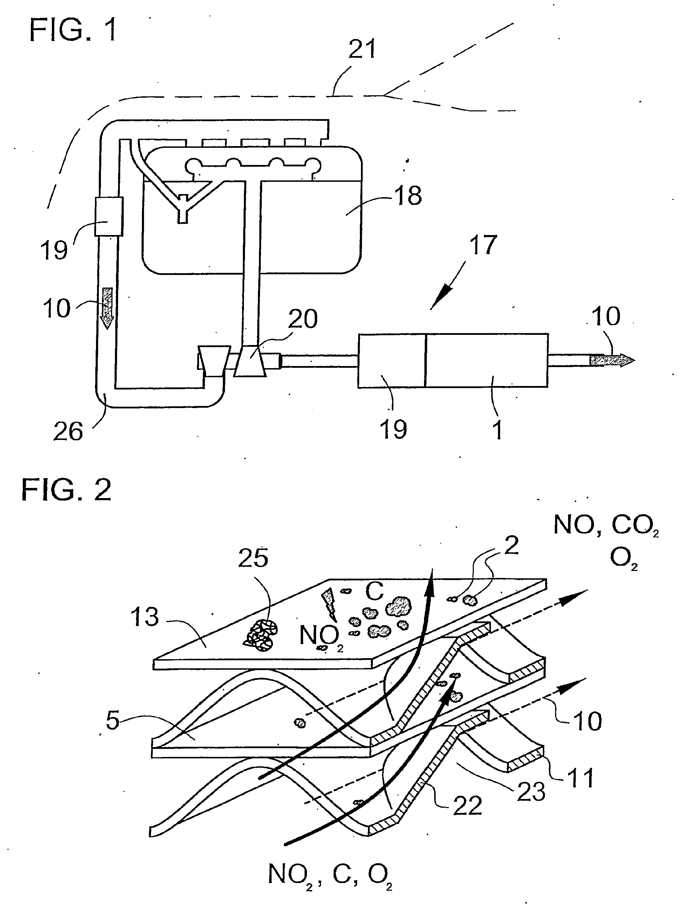

In Fig. 1 ist mit einer gestrichelten Linie ein Fahrzeug 21 angedeutet, welches ein Abgasreinigungssystem 17 aufweist. Ausgehend von einer Verbrennungskraftmaschine 18 strömt das Abgas über eine Abgasleitung 26 zunächst zu einem Konverter 19, der in unmittelbarer Nähe zur Verbrennungskraftmaschine 18 angeordnet ist. Dieser Konverter 19 dient zur Oxidation von im Abgas enthaltenen Stickstoffmonoxid hin zu Stickstoffdioxid und reichert somit den Abgasstrom mit Stickstoffdioxid auch unmittelbar nach Start der Verbrennungskraftmaschine 18 an. Das Abgas strömt nun in Strömungsrichtung 10 weiter hin zu einem Turbolader 20. In dem Turbolader 20 wird das hindurchströmende Abgas verwirbelt, so dass eine gleichmäßige Verteilung von Stickstoffdioxid vorliegt. Das Abgas trifft dann auf einen zweiten katalytischen Konverter 19, der beispielsweise weiteres Stickstoffdioxid produziert. Das NO₂-angereicherte Abgas strömt nun durch die Vorrichtung 1 zur Reduzierung von Partikeln. Das von (Ruß-)Partikeln gereinigte Abgas verlässt das Abgasreinigungssystem 17 in Strömungsrichtung 10.

Fig. 2 veranschaulicht die chemischen Umwandlungsvorgänge innerhalb der Vorrichtung 1. Die Vorrichtung 1 ist hier mit einer abwechselnden Anordnung von gewellten Metallfolien 11 und glatten Filterlagen 13 gebildet. Die Wellenstruktur der Metallfolien 11 bildet die Kanäle 5. Diese sind somit teilweise von der Filterlage 13 und der Metallfolie 11 umschlossen. In der Metallfolie 11 sind Vorsprünge 22 ausgebildet, die eine Umlenkung des Abgases hin zur Kanalwand bzw. der Filterlage 13 bewirken. Die Vorsprünge 22 sind hier als Ausstanzungen ausgebildet, so dass Öffnungen 23 in der Metallfolie 11 vorliegen und somit kommunizierende Kanäle 5 gebildet sind, bei denen ein Teil des Abgasstromes von einem Kanal 5 zu einem benachbarten Kanal 5 (und bevorzugt gleichzeitig durch Hindurchtreten durch eine Faserlage 13) strömen kann.

Das anströmende Abgas umfasst zumindest Stickstoffdioxid (NO₂), Partikel bzw. kohlenstoffhaltige Komponenten (C) und Sauerstoff (O₂). Durch die Teilumlenkung des Abgasstromes findet eine Anlagerung der Partikel 2 an den Kanalwänden und insbesondere an bzw. in der Faserlage 13 statt. Die Verweilzeit der Partikel 2 an der Kanalwand erhöht die Möglichkeit, mit dem Stickstoffdioxid in Kontakt zu treten und somit eine chemische Umsetzung der Rußpartikel zu bewirken. Besonders effizient hat sich dabei eine Filterlage 13 bewährt, die aus metallischen Fasern 25 gebildet ist. Diese weist eine so zerklüftete Oberfläche und eine Vielzahl von Hohlräumen auf, so dass sich hier die Partikel 2 gut anlagern können. Bei der Umsetzung der Partikel 2 findet einerseits eine Reduktion von Stickstoffdioxid hin zu Stickstoffmonoxid (NO) und andererseits eine Oxidation des Kohlenstoffs hin zu Kohlenstoffoxidverbindungen (CO, CO₂) statt. Damit weist das ausströmende Abgas einen höheren Anteil von Stickstoffmonoxid und Kohlendioxid auf.

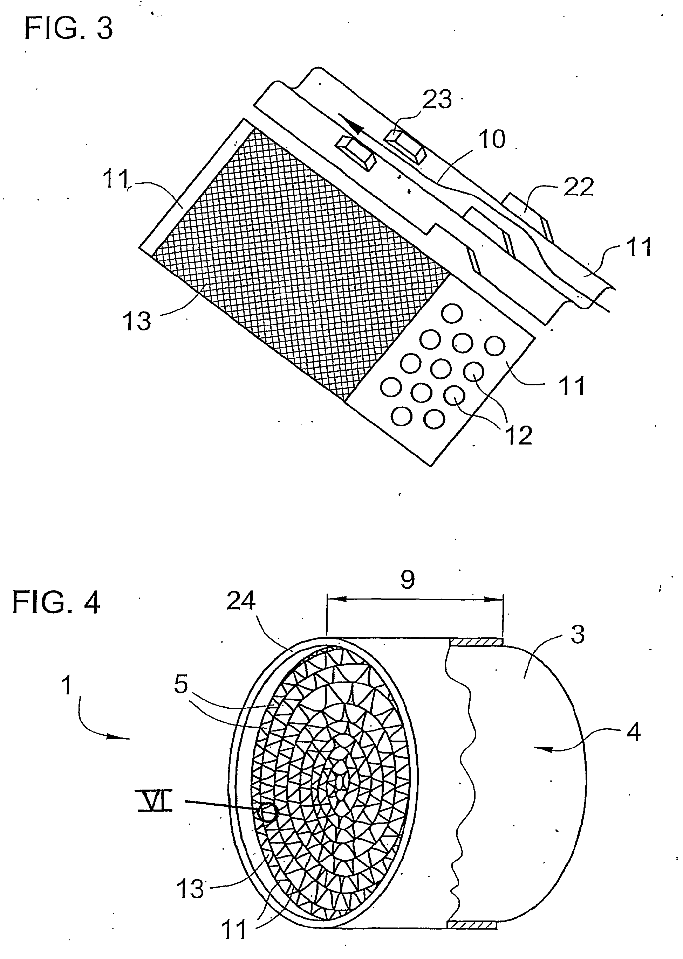

Fig. 3 veranschaulicht die Komponenten für ein weiteres Ausführungsbeispiel einer Vorrichtung 1 zur Reduzierung von Partikeln 2. Hierzu werden zwei unterschiedliche Komponenten (gegebenenfalls mit mehrfacher Wiederholung und in einem Stapel angeordnet) zur Ausbildung von Kanälen 5 eingesetzt. Im oberen Teil der Figur 3 ist eine gewellte Metallfolie 11 dargestellt. Die Wellung ist dabei maßgeblich für die Ausgestaltung der Kanäle 5. Zusätzlich zu dieser Wellung weist die Metallfolie 11 verschiedene Vorsprünge 22 und Öffnungen 23 auf. Exemplarisch ist dabei die Strömungsrichtung 10 für einen Teilabgasstrom dargestellt. Bezüglich des Vorsprunges 22, auf den der Abgasstrom zunächst trifft, wird ein Teil nach oben abgelenkt, insbesondere hin zu einer benachbart angeordneten Filterlage 13. Ein anderer Teilabgasstrom strömt jedoch an dem Vorsprung 22 vorbei und verbleibt im Kanal 5. Anschließend trifft dieser Teilabgasstrom nun auf eine invers ausgebildete Art eines Vorsprungs 22, wobei es beispielsweise infolge von unterschiedlichen Druckverhältnissen innerhalb der Kanäle 5 erneut zu einer Aufspaltung des Abgasstromes kommen kann. Ein Teil gelangt somit durch die Öffnung 23 in den benachbarten Kanal 5 während der Rest des Abgasstromes weiter im Kanal 5 entlang strömt

Die Filterlage 13 ist hier als Verbund ausgebildet. Das Filtermaterial (hier schraffiert dargestellt) wird in Strömungsrichtung jeweils von einer glatten Metallfolie 11 bzw. einem Metallstreifen begrenzt. In Figur 3 links oben dargestellt (bevorzugt die Abgasaustrittsseite der Vorrichtung 1) ist ein schmaler Metallstreifen vorgesehen, der bevorzugt um die Faserlage 13 herum gebogen und mit dieser verschweißt ist. Damit wird verhindert, dass die beispielsweise als metallisches Faservlies ausgebildete Filterlage 13 aufgrund der thermischen und dynamischen Belastung aufgelöst wird. In der Darstellung unten rechts (bevorzugt die Abgaseintrittseite) ist ein breiterer Metallstreifen vorgesehen. Dieser wird bevorzugt in ähnlicher Weise an der Filterlage 13 befestigt wie der andere Metallstreifen. Als Katalysator-Trägerfläche und/oder als Mischer für das einströmende Abgas ist dieser breite Metallstreifen ausgebildet. Dazu weist er auch mehrere Perforationen 12 auf. Bevorzugt ist zumindest ein Teil dieser Perforationen 12 mit einem größeren Durchmesser versehen als der größte Kanalquerschnitt des darüber liegenden Kanals beträgt.

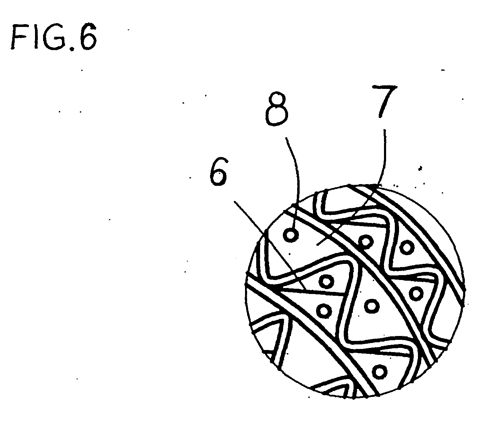

Fig. 4 und 6 veranschaulichen schematisch eine Ausführungsvariante der Vorrichtung 1, wobei Fig. 6 im Wesentlichen den mit VI gekennzeichneten Bereich aus Fig. 4 vergrößert darstellt. Die Trägerstruktur 3 wird hier wiederum mit einer spiralig gewickelten Metallfolie 11 und einer Filterlage 13 bereitgestellt. Durch die Wellung der Metallfolie 11 ist wiederum eine Vielzahl von durchströmbaren Kanälen 5 gebildet. Die Trägerstruktur 3 mit einem vorgegebenen Volumen 4 ist in einem Gehäuse 24 angeordnet, welches bevorzugt einen zylindrischen Aufbau hat. Gleichwohl können auch andere Querschnittsformen der Vorrichtung 1 realisiert werden. Die Trägerstruktur 3 ist mit einer Länge 9 ausgeführt, die mindestens 150 mm beträgt.

In einer vergrößerten Darstellung unten links in Figur 4 ist ein Detail der Trägerstruktur 3 dargestellt. Aus dieser Detailansicht ist erkennbar, dass die Trägerstruktur 3 eine erste Beschichtung 6 aufweist. Die erste Beschichtung 6 umfasst Washcoat in einer Menge von ca. 10 bis 60 g/l der Trägerstruktur 3 sowie Edelmetalle 8 in einer Menge von ca. 0,35 bis 3,53 g/l.

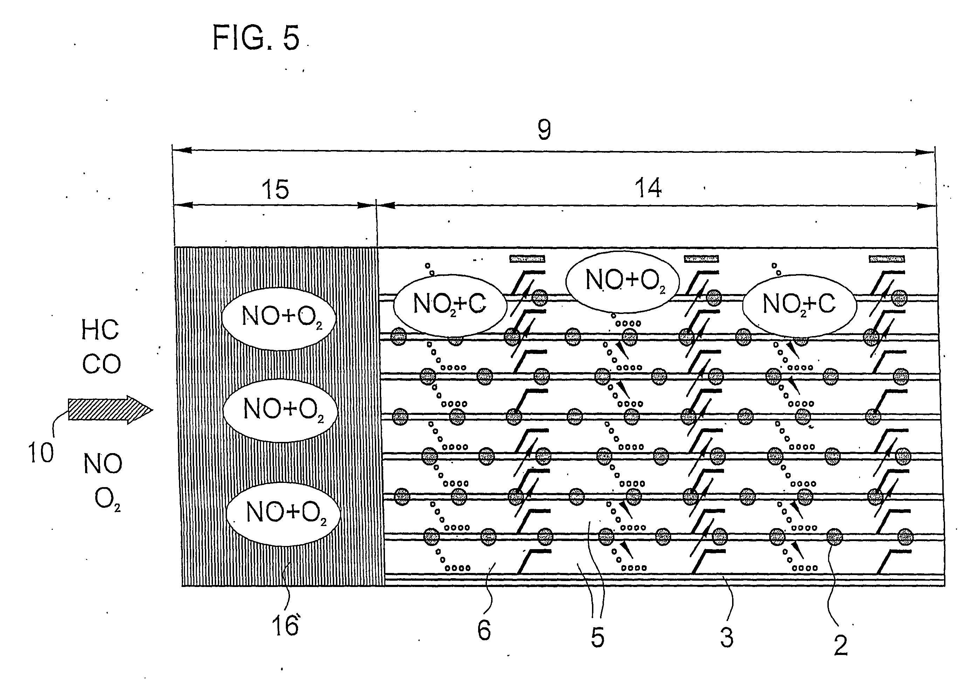

Fig. 5 zeigt schematisch einen Querschnitt durch eine Vorrichtung 1 zur Reduzierung von Partikeln 2. Die Vorrichtung 1 umfasst eine Trägerstruktur 3 mit einer Vielzahl von durchströmbaren Kanälen 5. Die hier dargestellte Vorrichtung 1 ist mit zwei Teilbereichen ausgeführt. In Strömungsrichtung 10 gesehen weist die Vorrichtung 1 zunächst einen zweiten Teilbereich 15 mit einer zweiten Beschichtung 16 auf. Diese zweite Beschichtung 16 oxidiert das im Abgas enthaltene Stickstoffmonoxid zu Stickstoffdioxid auf. Daran schließt sich unmittelbar ein erster Teilbereich 14 mit der ersten Beschichtung 6 an. Aufgrund der erfindungsgemäß beschriebenen Ausgestaltung der ersten Beschichtung 6 dient das im zweiten Teilbereich 15 gebildete Stickstoffdioxid nun zur Umwandlung der Partikel 2, so dass eine Reduktion hin zum Stickstoffmonoxid stattfindet. Stromabwärts davon wird (noch innerhalb der Vorrichtung 1) jedoch aufgrund der ersten Beschichtung 6 ein erneutes Oxidieren der Stickstoffmonoxide möglich. So kann das neu gebildete Stickstoffdioxid in der Vorrichtung 1 erneut zur Konvertierung der Partikel 2 eingesetzt werden. In der hier gezeigten Ausführungsvariante sind der erste Teilbereich 14 und der zweite Teilbereich 15 innerhalb einer Trägerstruktur 3 angeordnet, welche wieder eine vorgebbare Länge 9 aufweist. Grundsätzlich ist es jedoch auch möglich, zwischen dem zweiten Teilbereich 15 und dem ersten Teilbereich 14 einen Spalt vorzusehen, wobei dann bevorzugt zwei Trägerstrukturen bzw. ein Konverter und eine Trägerstruktur vorgesehen sind.

Mit der hier vorgeschlagenen Vorrichtung zur Reduzierung von Partikeln ist eine Wiedergewinnung von Stickstoffdioxid und somit eine deutlich effizientere Umsetzung von im Abgas enthaltenen Partikeln möglich.

### Bezugszeichenliste

- 1: Vorrichtung
- 2: Partikel
- 3: Trägerstruktur
- 4: Volumen
- 5: Kanal
- 6: erste Beschichtung
- 7: Washcoat
- 8: Edelmetall
- 9: Länge
- 10: Strömungsrichtung
- 11: Metallfolie
- 12: Perforation
- 13: Filterlage
- 14: erster Teilbereich
- 15: zweiter Teilbereich
- 16: zweite Beschichtung
- 17: Abgasreinigungssystem
- 18: Verbrennungskraftmaschine
- 19: Konverter
- 20: Turbolader
- 21: Fahrzeug
- 22: Vorsprung
- 23: Öffnung
- 24: Gehäuse
- 25: Faser
- 26: Abgasleitung

## Patentansprüche

1. Vorrichtung (1) zur Reduzierung von Partikeln (2) eines Abgases mit mindestens einer Trägerstruktur (3) eines vorgebbaren Volumens (4), die eine Vielzahl von durchströmbaren Kanälen (5) bildet, wobei die Kanäle (5) zumindest teilweise Mittel zur Umlenkung des Abgases innerhalb des Kanals (5) aufweisen; wobei die mindestens eine Trägerstruktur (3) wenigstens teilweise eine erste Beschichtung (6) umfassend Washcoat (7) aufweist, und pro Liter des mit der ersten Beschichtung (6) versehenen Volumens (4) der Trägerstruktur (3) eine Menge Washcoat (7) im Bereich von 10 bis 60 Gramm vorgesehen ist; wobei weiter die mindestens eine Trägerstruktur (3) eine Länge (9) in einer Strömungsrichtung (10) hat, die mindestens 120 Millimeter beträgt und die Kanäle (5) entlang der Länge (9) in einem vorgegebenen Abstand immer wieder Mittel zur Umlenkung des Abgases aufweisen; und wobei die Trägerstruktur mindestens eine Filterlage (13) aufweist, die ein Verbund aus Filtermaterial und Metallstreifen ist, wobei das Filtermaterial in Strömungsrichtung (10) von jeweils einen Metallstreifen begrenzt ist, wobei ein Metallstreifen:
- breiter als der andere Metallstreifen ist,
- mehrere Perforationen (12) aufweist, und
- als Katalysator-Trägerfläche und/oder als Mischer für das einströmende Abgas ausgeführt ist.

2. Vorrichtung (1) nach Anspruch 1, **dadurch gekennzeichnet, dass** die erste Beschichtung (6) mit mindestens einem Edelmetall (8) versehen ist, wobei pro Liter des mit der ersten Beschichtung (6) versehenen Volumens (4) der Trägerstruktur (3) eine Menge des mindestens einen Edelmetalls (8) im Bereich von 0,35 bis 3,53 Gramm vorgesehen ist.

3. Vorrichtung (1) nach einem der vorstehenden Ansprüche, **dadurch gekennzeichnet, dass** die mindestens eine Trägerstruktur (3) zumindest teilweise strukturierte Metallfolien (11) umfasst.

4. Vorrichtung (1) nach einem der vorstehenden Ansprüche, **dadurch gekennzeichnet, dass** die mindestens eine Trägerstruktur (3) zumindest teilweise Metallfolien (11) mit Perforationen (12) umfasst.

5. Vorrichtung (1) nach einem der vorstehenden Ansprüche, **dadurch gekennzeichnet, dass** die mindestens eine Trägerstruktur (3) wenigstens einen ersten Teilbereich (14) und wenigstens einen zweiten Teilbereich (15) aufweist, von denen mindestens einer eine Beschichtung (6, 16) aufweist.

6. Vorrichtung (1) nach einem der vorhergehenden Ansprüche, **dadurch gekennzeichnet, dass** die mindestens eine Trägerstruktur (3) wenigstens einen ersten Teilbereich (14) mit einer ersten Beschichtung (6) und wenigstens einen zweiten Teilbereich (15) mit einer zweiten Beschichtung (16) aufweist.

7. Vorrichtung (1) nach einem der vorstehenden Ansprüche, **dadurch gekennzeichnet, dass** die mindestens eine Trägerstruktur (3) wenigstens einen ersten Teilbereich (14) mit mindestens einer Filterlage (13) und wenigstens einen filterlosen zweiten Teilbereich (15) aufweist, wobei der mindestens eine erste Teilbereich (14) dem mindestens einen zweiten Teilbereich (15) in Strömungsrichtung (10) nachgeordnet ist.

8. Abgasreinigungssystem (17) für eine mobile Verbrennungskraftmaschine (18) umfassend mindestens einen Konverter (19) wenigstens zur Oxidation von im Abgas enthaltenen Stickstoffmonoxid zu Stickstoffdioxid und mindestens einer in Strömungsrichtung (10) des Abgases nachgeordneten Vorrichtung (1) nach einem der Ansprüche 1 bis 7.

9. Abgasreinigungssystem (17) nach Anspruch 8, wobei das Abgasreinigungssystem (17) einen Turbolader (20) aufweist, **dadurch gekennzeichnet, dass** ein Konverter (19) zwischen der Verbrennungskraftmaschine (18) und dem Turbolader (20) angeordnet ist.

10. Fahrzeug (21) umfassend mindestens eine Vorrichtung (1) nach einem der Ansprüche 1 bis 7 oder mindestens ein Abgasreinigungssystem (17) nach Anspruch 8 oder 9.

## Claims

1. Device (1) for reducing particles (2) of an exhaust gas, having at least one support structure (3) of a predefinable volume (4), which forms a plurality of channels (5) which can be traversed by flow, with the channels (5) at least partially having means for deflecting the exhaust gas within the channel (5), and with the at least one support structure (3) at least partially having a first coating (6) comprising a washcoat (7), and a quantity of washcoat (7) of from 10 to 60 grams is provided per liter of the volume (4), which is provided with the first coating (6), of the support structure (3), wherein the at least one support structure (3) has a length (9) of at least 120 millimeters in a flow direction (10) and the channels (5) along the length (9) having means for deflecting the exhaust gas in a repeating fashion with a predefined spacing and wherein the support structure (3) comprises at least one filter layer (13), the filter layer (13) is embodied as a composite of a filter material and metal strips, wherein the filter material is delimited in the flow direction (10) in each case by a metal strip, wherein one metal strip:
- is wider than the other metal strip,
- has a plurality of perforations (12), and
- is embodied as a catalytic converter support face and/or as a mixer for the exhaust gas flowing in.

2. Device (1) according to claim 1, **characterized in that** the first coating (6) is provided with at least one noble metal (8), with a quantity of the at least one noble metal (8) in a range from 0.35 to 3.53 grams being provided per liter of the volume (4), which is provided with the first coating (6), of the support structure (3).

3. Device (1) according to one of the preceding claims, **characterized in that** the at least one support structure (3) at least partially comprises structured metal foils (11).

4. Device (1) according to one of the preceding claims, **characterized in that** the at least one support structure (3) at least partially comprises metal foils (11) with perforations (12).

5. Device (1) according to one of the preceding claims, **characterized in that** the at least one support structure (3) has at least one first partial region (14) and at least one second partial region (15), at least one of which has a coating (6, 16).

6. Device (1) according to one of the preceding claims, **characterized in that** the at least one support structure (3) has at least one first partial region (14) with a first coating (6) and at least one second partial region (15) with a second coating (16).

7. Device (1) according to one of the preceding claims, **characterized in that** the at least one support structure (3) has at least one first partial region (14) with at least one filter layer (13) and at least one filterless second partial region (15), with the at least one first partial region (14) being arranged downstream of the at least one second partial region (15) in the flow direction (10).

8. Exhaust gas purification system (17) for a mobile internal combustion engine (18), comprising at least one converter (19) at least for oxidizing nitrogen monoxide which is contained in the exhaust gas to form nitrogen dioxide, and at least one device (1) according to one of claims 1 to 7 arranged downstream in the flow direction (10) of the exhaust gas.

9. Exhaust gas purification system (17) according to claim 8, with the exhaust gas purification system (17) having a turbocharger (20), **characterized in that** a converter (19) is arranged between the internal combustion engine (18) and the turbocharger (20).

10. Vehicle (21) comprising at least one device (1) according to one of claims 1 to 7 or at least one exhaust gas purification system (17) according to claim 8 or 9.

## Revendications

1. Dispositif (1) destiné à la réduction de particules (2) d'un gaz d'échappement avec au moins une structure de support (3) d'un volume pouvant être prédéterminé (4), lequel dispositif (1) formant une multiplicité de canaux (5) pouvant être traversés, les canaux (5) ayant au moins partiellement des moyens pour la déviation du gaz d'échappement à l'intérieur du canal (5), l'au moins une structure de support (3) étant dotée au moins partiellement d'un premier revêtement (6) comprenant du "Washcoat" (7) et par litre de volume de la structure de support (3) ayant le premier revêtement (6), une quantité de "Washcoat" (7) étant prévue dans la marge de 10 à 60 grammes, et pour continuer, l'au moins une structure de support (3) ayant une longueur (9) dans une direction d'écoulement (10) qui comporte au moins 120 millimètres et les canaux (5) ayant le long de la longueur (9) en une distance prédéterminée, encore et toujours des moyens pour la déviation du gaz d'échappement ; et la structure de support ayant au moins une couche de filtre (13) qui est un composite de matériau de filtre et de bandes métalliques, le matériau de filtre étant limité par respectivement une bande métallique en direction d'écoulement (10), une bande métallique :
- étant plus large que l'autre bande métallique,
- ayant une pluralité de perforations (12) et
- étant réalisée en tant que surface de support de catalyseur et/ou en tant que mélangeur pour le gaz d'échappement affluant.

2. Dispositif (1) selon la revendication 1, **caractérisé en ce que** le premier revêtement (6) est doté d'au moins un métal noble (8), dans quel cas par litre du volume (4) doté du premier revêtement (6) de la structure de support (3) une quantité de l'au moins un métal noble (8) est prévue dans la marge de 0,35 à 3,53 grammes.

3. Dispositif (1) selon l'une des revendications précédentes, **caractérisé en ce que** l'au moins une structure de support (3) comprend des feuilles métalliques au moins partiellement structurées (11).

4. Dispositif (1) selon l'une des revendications précédentes, **caractérisé en ce que** l'au moins une structure de support (3) comprend au moins partiellement des feuilles métalliques (11) avec des perforations (12).

5. Dispositif (1) selon l'une des revendications précédentes, **caractérisé en ce que** l'au moins une structure de support (3) a au moins une première région partielle (14) et au moins une deuxième région partielle (15) dont au moins l'un a un revêtement (6, 16).

6. Dispositif (1) selon l'une des revendications précédentes, **caractérisé en ce que** l'au moins une structure de support (3) a au moins une première région partielle (14) avec un premier revêtement (6) et au moins une deuxième région partielle (15) avec un deuxième revêtement (16).

7. Dispositif (1) selon l'une des revendications précédentes, **caractérisé en ce que** l'au moins une structure de support (3) a au moins une première région partielle (14) avec au moins une couche de filtre (13) et au moins une deuxième région partielle sans filtre (15), l'au moins une première région partielle (14) étant agencée en direction du courant (10) en aval de l'au moins une deuxième région partielle (15).

8. Système d'épuration de gaz d'échappement (17) pour une machine à combustion interne mobile (18), comprenant au moins un convertisseur (19) au moins pour l'oxydation de monoxyde d'azote contenu dans le gaz d'échappement en dioxyde d'azote et au moins un dispositif (1) agencé en direction d'écoulement (10) en aval du gaz d'échappement selon l'une des revendications 1 à 7.

9. Système d'épuration de gaz d'échappement (17) selon la revendication 8, le système d'épuration de gaz d'échappement (17) ayant un turbocompresseur (20), **caractérisé en ce qu'**un convertisseur (19) est agencé entre la machine à combustion interne (18) et le turbocompresseur (20).

10. Véhicule (21) comprenant au moins un dispositif (1) selon l'une des revendications 1 à 7 ou au moins un système d'épuration de gaz d'échappement (17) selon la revendication 8 ou 9.
